# DEMANDE DE BREVET EUROPEEN

(11) **EP 0 854 491 A1**
(43) Date de publication de la demande: **22.07.1998**
(21) Numéro de dépôt: 98400022.4
(22) Date de dépôt: 07.01.1998
(51) Int. Cl.: H01H 73/00, H01H 47/02

(54) **Appareil contacteur-disjoncteur**

(30) Priorité: 14.01.1997 FR 9700368
(71) Demandeur: SCHNEIDER ELECTRIC SA, 92100 Boulogne Billancourt (FR)
(72) Inventeur: Baurand, Gilles, 78360 Montesson (FR); Benkaroun, Karim, 78500 Sartrouville (FR); Gousset, Alain, 92000 Nanterre (FR); Olifant, Jacques, 92000 Nanterre (FR); Riffaud, Daniel, 75007 Paris (FR)

(57) **Abrégé**

Appareil contacteur-disjoncteur logeant d'une part des pôles de puissance et un électro-aimant (10) servant à actionner les contacts mobiles des pôles en mode contacteur et comprenant un circuit magnétique fixe (11), un circuit magnétique mobile (13) et une bobine (12) dont l'alimentation est commandée par un interrupteur (20), et d'autre part au moins un capteur de courant (50) servant à commander un électro-aimant de déclenchement, caractérisé en ce que l'électro-aimant d'actionnement et l'électro-aimant de déclenchement sont constitués par un seul électro-aimant dont le circuit magnétique mobile (13) est une palette pivotante reliée mécaniquement aux porte-contacts des pôles et ayant un moment d'inertie faible et en ce qu'il comprend des moyens électriques (30) de diminution rapide du flux magnétique, ces moyens étant mis en oeuvre par un dispositif de commande électronique (40) associé au capteur de courant (50).

## Description

La présente invention concerne un appareil contacteur-disjoncteur logeant d'une part des pôles de puissance qui comportent des ponts de contacts mobiles coopérant avec des contacts fixes, et un électro-aimant qui sert à actionner les contacts mobiles en mode contacteur et qui comprend un circuit magnétique fixe, un circuit magnétique mobile et une bobine dont l'alimentation est commandée par un interrupteur, et d'autre part au moins un capteur de courant servant à commander un électro-aimant de déclenchement.

Un contacteur permet de couper ou d'alimenter en réponse à un signal de commande la ligne d'alimentation d'une charge telle qu'un moteur. On associe généralement au contacteur un disjoncteur qui a pour but d'ouvrir la ligne en cas de détection d'une surintensité dans celle-ci due à un court-circuit par exemple. La fonction disjoncteur est nécessaire pour ouvrir rapidement la ligne car l'ouverture du contacteur pour couper l'alimentation de la bobine de l'électro-aimant nécessiterait trop de temps en raison de la décroissance lente du courant à travers celle-ci.

Les fonctions contacteur et disjoncteur sont parfois réunies dans un seul appareil électrique interrupteur nommé contacteur-disjoncteur tel que celui décrit dans le brevet FR2638563. Il est ainsi associé au pont de contacts du contacteur un dispositif de protection, tel qu'un percuteur par exemple, qui agit directement sur le pont de contacts mobiles pour ouvrir les contacts en cas de détection d'un courant de court-circuit. Cet appareil comprend aussi une serrure qui reçoit les ordres des dispositifs de protection (thermique et magnétique) pour agir sur l'alimentation de la bobine. Cependant un tel appareil reste encombrant et coûteux.

La présente invention a par conséquent pour but d'assurer dans un appareil contacteur-disjoncteur les fonctions recherchées de commande et de protection par une ouverture rapide d'un circuit magnétique mobile unique agissant sur le porte-contacts. Cet appareil évite les dispositifs de protection mécanique. Il est d'encombrement standard et de faible prix de revient.

Selon l'invention, l'appareil interrupteur est caractérisé en ce que l'électro-aimant d'actionnement et l'électro-aimant de déclenchement sont constitués par un seul électro-aimant dont le circuit magnétique mobile est une palette pivotante reliée mécaniquement aux porte-contacts et ayant un moment d'inertie faible et en ce qu'il comprend des moyens électriques de diminution rapide du flux dans les circuits magnétiques, ces moyens étant mis en oeuvre par un dispositif de commande électronique associé au capteur de courant.

Selon un mode de réalisation de l'invention, les moyens électriques comportent un interrupteur électronique à ouverture rapide qui est disposé en série avec la bobine, et un composant ou réseau électrique de diminution rapide du courant qui est placé en dérivation aux bornes de l'interrupteur à ouverture rapide de façon à être en série avec la bobine pour réaliser une boucle fermée de courant lorsque ledit interrupteur est mis à l'état non passant par le dispositif de commande. Les moyens électriques permettent, à l'ouverture de l'interrupteur, de faire décroître rapidement le courant dans la bobine et par conséquent le flux dans les circuits magnétiques sans altérer le fonctionnement normal de l'appareil.

Le composant électrique est constitué de préférence par une diode Zéner présentant une tension d'avalanche contrôlée inférieure à la tension de claquage de l'interrupteur à ouverture rapide.

Dans un mode de réalisation particulier de l'invention, les moyens électriques comportent l'interrupteur de commande de l'alimentation de la bobine et un composant électrique de diminution rapide du courant qui est placé en dérivation aux bornes de la bobine de façon à être en série avec celle-ci lorsque l'interrupteur de commande est mis à l'état non passant par le dispositif de commande.

D'autres caractéristiques et avantages apparaîtront dans la description en regard des dessins annexés.

Aux dessins annexés:
- la figure 1 montre un appareil contacteur-disjoncteur selon l'invention;
- la figure 2 illustre un schéma électrique d'un circuit de contrôle de la bobine de l'appareil munie d'un seul enroulement;
- la figure 3 montre la figure 2 pour une bobine munie de deux enroulements;
- la figure 4 illustre une variante de la figure 2;
- la figure 5 illustre la décroissance du courant dans la bobine de l'appareil;
- la figure 6 montre un autre mode de réalisation de la figure 2.

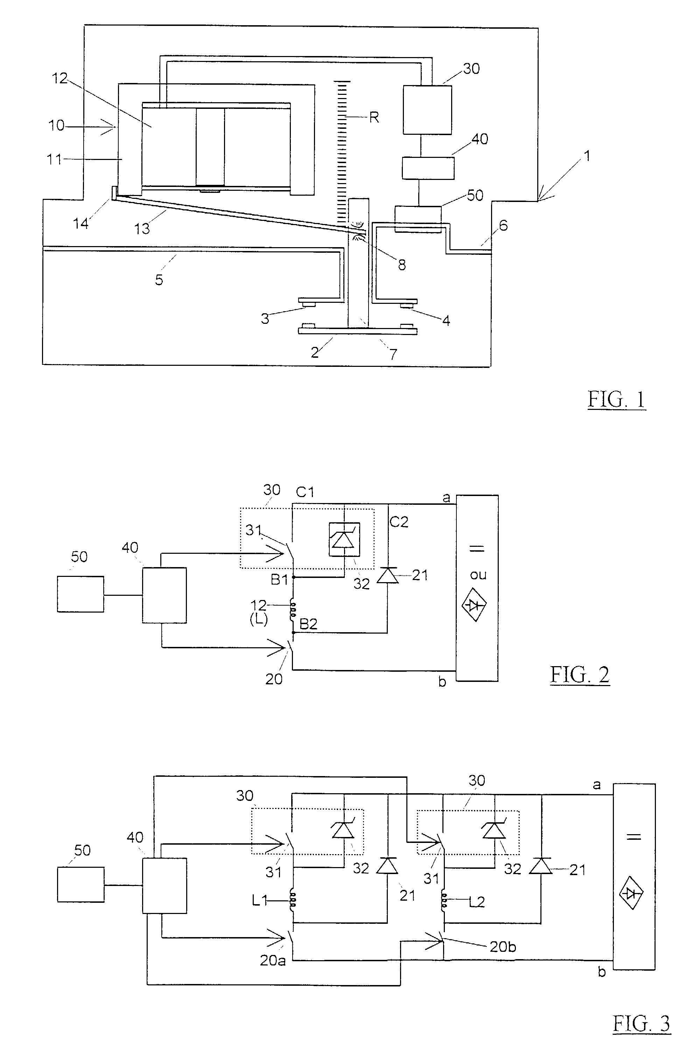

L'appareil électrique interrupteur illustré sur la figure 1 est un contacteur-disjoncteur qui est destiné à couper ou à établir le passage du courant dans la ligne d'alimentation d'une charge telle qu'un moteur électrique. Il intègre la fonction disjoncteur pour pouvoir ouvrir rapidement la ligne en réponse à la détection d'un courant de défaut.

L'appareil comporte, logés dans un corps de boîtier 1, plusieurs pôles de puissance qui comprennent chacun un pont de contacts mobiles 2 coopérant avec des contacts fixes 3, 4 qui sont portés par des conducteurs respectifs 5, 6. Chaque pont de contacts 2 est monté sur un porte-contacts 7 guidé en translation.

Un électro-aimant 10 est logé dans le boîtier 1 pour commander l'ouverture et la fermeture des pôles de puissance. Il comprend un circuit magnétique fixe 11, une bobine 12 à au moins un enroulement L et un circuit magnétique mobile 13 destiné à être attiré en position de fermeture par le circuit magnétique fixe quand la bobine 12 est alimentée en courant et sollicité vers une position d'ouverture par au moins un ressort R.

Le circuit magnétique mobile 13 est une palette pivotante articulée autour d'un axe 14 et reliée mécaniquement aux porte-contacts 7 par une liaison mécanique articulée 8.

On limite les courants induits par la nature du matériau à forte résistivité, la forme et la technologie du circuit magnétique mobile. De ce fait, l'hypothèse sera faite dans la présente invention que la variation de courant dans la bobine est équivalente à la variation de flux magnétique.

La bobine 12 est alimentée en courant continu ou en courant alternatif redressé par un pont de diodes (figure 2). Elle est disposée sur un chemin principal de courant C1 entre deux lignes d'alimentation, une ligne d'aller a connectée à la borne B1 de la bobine et une ligne de retour b connectée à la borne B2.

Son alimentation est commandée par un interrupteur 20 placé sur le chemin de courant C1. L'interrupteur 20 est de type mécanique mais peut aussi être un semi-conducteur, par exemple bipolaire de type IGBT ou MOS. Il peut être associé à un dispositif hacheur du courant pour permettre une régulation du courant dans la bobine en fonctionnement normal du contacteur. L'interrupteur 20 peut être contrôlé par un dispositif de commande électronique 40. Par ailleurs, cet interrupteur peut être actionné en cas de détection d'un défaut de surcharge.

Une diode de roue libre 21 est disposée sur un chemin dérivé de courant C2 de façon à être en série avec la bobine quand l'interrupteur 20 n'est pas passant, sa cathode et son anode étant reliées respectivement à la ligne a et à la borne B2 de la bobine 12. Cette diode permet d'assurer la continuité électrique en fonctionnement normal du contacteur lorsque l'interrupteur 20 est non passant.

L'appareil comporte des moyens électriques 30 de diminution rapide du flux magnétique au travers de la décroissance rapide du courant dans la bobine 12 de l'électro-aimant. Ces moyens sont mis en oeuvre par le dispositif de commande électronique 40 en cas de détection, par au moins un capteur de courant 50, d'un défaut de court-circuit sur la ligne d'alimentation du circuit de charge. Un capteur de courant 50 est placé sur chaque ligne de courant.

Les moyens électriques 30 de diminution rapide du flux comportent un interrupteur 31 électronique à ouverture rapide et un composant ou réseau électrique 32 de diminution rapide du courant.

La diminution rapide du courant dans la bobine, par conséquent la diminution rapide du flux magnétique, dépend des caractéristiques électriques du composant 32 et de la bobine 12.

L'interrupteur 31 est placé sur le chemin principal C1 en série avec la bobine 12 et l'interrupteur 20. Il est destiné à être non passant en cas de détection d'un court-circuit. Sa commutation est commandée par le dispositif de commande 40 qui est apte à recevoir et à traiter un signal de détection de défaut de court-circuit fourni par le capteur 50. Dans ce cas, l'alimentation de la bobine est coupée par l'ouverture de l'interrupteur 31, quel que soit l'état de l'interrupteur 20.

Le composant électrique 32 est monté en dérivation aux bornes de l'interrupteur 31 de façon à être en série avec la bobine 12 et la diode 21 lorsque cet interrupteur est à l'état non passant pour constituer une boucle fermée de courant.

Le composant 32 est de préférence constitué d'une diode Zéner, sa cathode et son anode étant respectivement connectés à la ligne a et à la borne B1 de la bobine.

L'interrupteur 31 et le composant 32 peuvent indifféremment être disposés en amont ou en aval de la bobine 12 tout en étant en amont de l'interrupteur 20.

Dans une variante non illustrée de l'invention, le composant ou réseau électrique 32 peut être un circuit oscillateur de type RLC qui est disposé en dérivation aux bornes de la bobine 12.

Enfin, la diode de roue libre 21 assure la continuité électrique lorsque l'interrupteur 31 devient non passant. Lorsque la bobine est alimentée en courant alternatif redressé et que l'interrupteur 20 est passant, la continuité électrique peut être assurée par le pont de diodes à la place de la diode 21.

La figure 3 illustre le schéma de la figure 2 pour une bobine 12 munie de deux enroulements L1 et L2 mis en parallèle. L'enroulement L1 constitue l'enroulement d'appel qui sert à provoquer le déplacement du circuit magnétique mobile de l'électro-aimant, et l'enroulement L2 constitue l'enroulement de maintien qui permet de maintenir le circuit magnétique mobile en position attirée. L'alimentation de chaque enroulement est commandée par des interrupteurs respectifs 20a et 20b. Une diode de roue libre 21 et des moyens électriques 30 de diminution rapide du flux magnétique sont associés à chaque enroulement L1 et L2.

En cas de détection d'un défaut de court-circuit lors de la phase d'appel, l'ouverture simultanée des deux interrupteurs 31 associés aux enroulements L1 et L2 est réalisée. En cas de détection d'un défaut de court-circuit lors de la phase de maintien, seule l'ouverture de l'interrupteur 31 associé à l'enroulement L2 est réalisée puisque l'enroulement L1 n'est plus alimenté.

Dans une variante non illustrée de la figure 3, l'interrupteur 20a et la diode 21 associés à l'enroulement d'appel L1 sont supprimés. La commutation appel-maintien est alors assurée par l'interrupteur 31 des moyens 30 associés à l'enroulement d'appel L1, et la continuité électrique est assurée par la diode de roue libre 21 associée à l'enroulement de maintien L2.

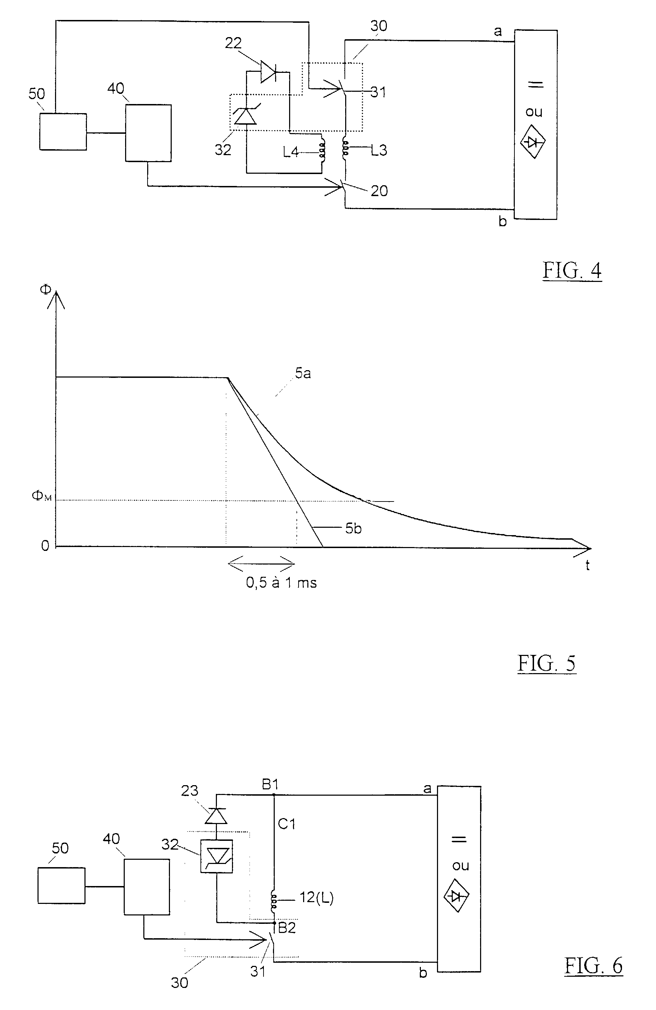

Dans une variante de la figure 2, comme illustré à la figure 4, la bobine 12 est constituée par un transformateur T comprenant un enroulement primaire L3 et un enroulement secondaire L4, l'enroulement primaire L3 étant placé en série avec l'interrupteur 20. Une diode 22 est placée en série avec l'enroulement secondaire L4.

Les moyens 30 de diminution rapide du flux comprennent l'interrupteur à ouverture rapide 31 qui est placé en série avec l'enroulement primaire L3 et le composant électrique 32 qui est constitué par une diode Zéner et est placé en série avec l'enroulement secondaire L4.

Le fonctionnement de l'appareil selon l'invention va à présent être décrit en se référant à la figure 2.

En fonctionnement normal du contacteur-disjoncteur, l'alimentation de la bobine est commandée par l'interrupteur 20, l'interrupteur 31 étant à l'état passant. Le courant, par conséquent le flux magnétique, suit une courbe de décroissance habituelle selon les caractéristiques électriques de la bobine.

En cas de détection d'un court-circuit, le capteur 50 envoie un signal au dispositif de commande 40 qui déclenche le changement d'état de l'interrupteur 31 qui se bloque. En raison de la valeur de la tension d'avalanche contrôlée Vz de la diode Zéner 32 qui est bien supérieure à la tension d'alimentation, aucun courant de la ligne d'alimentation a vers la ligne b ne peut passer.

Le flux emmagasiné dans les circuits magnétiques entretient un courant dans la bobine qui passe alors par la diode 21 et la diode Zéner 32 en réalisant une boucle fermée. En passant par la diode Zéner 32, le potentiel aux bornes de la bobine devient égal à la tension d'avalanche contrôlée Vz et le flux magnétique décroît selon l'équation Vz/N où N est le nombre de spires de l'enroulement de la bobine. La tension Vz n'est jamais supérieure à la tension de claquage V_{BR} de l'interrupteur 31.

En référence au circuit de la figure 4, en fonctionnement normal, le courant circulant à travers l'enroulement primaire L3 de la ligne a vers la ligne b induit un courant circulant en sens contraire dans l'enroulement secondaire L4 qui reste cependant bloqué en raison de la présence de la diode 22. En cas d'ouverture de l'interrupteur 31 suite à une détection de court-circuit, le courant traversant l'enroulement primaire L3 circule alors en sens inverse ce qui induit un courant de sens contraire dans l'enroulement secondaire L4 qui circule et passe par conséquent par la diode Zéner. Le flux magnétique diminue alors selon l'équation Vz/N4 où N4 est le nombre de spires dans l'enroulement secondaire L4.

Les courbes 5a et 5b de la figure 5 montrent les résultats respectifs d'une décroissance habituelle du flux sans l'utilisation de la diode Zéner et d'une décroissance du flux en utilisant la diode Zéner. La diminution rapide du flux jusqu'à une valeur inférieure au flux de maintien ΦM pour lequel le circuit magnétique mobile n'est plus attiré est ainsi réalisée en un temps inférieur à 1 ms ce qui permet de réaliser une ouverture des pôles en un temps inférieur à 3 ms comparé au temps d'environ 20 ms en fonctionnement normal du contacteur. L'écart entre le temps de 1ms et 3ms est dû à l'inertie mécanique de la palette qui est toutefois faible.

Selon l'invention, la fonction disjoncteur de l'appareil contacteur-disjoncteur est donc réalisée d'une part, grâce à la diminution rapide du flux magnétique par la présence des moyens électriques 30, et d'autre part, l'agencement particulier de l'électro-aimant dont la palette 13 présente une faible inertie pour permettre son mouvement rapide et qui constitue un organe direct d'actionnement des porte-contacts 7.

Dans un mode de réalisation particulier de l'invention illustré à la figure 6, les moyens électriques 30 de diminution rapide du flux comportent en tant qu'interrupteur à ouverture rapide l'interrupteur 20 de commande de l'alimentation de la bobine. Dans ce cas, l'ouverture de l'électro-aimant est toujours rapide. Selon le schéma, la diode Zéner 32 est en dérivation aux bornes de la bobine 12. Une diode 23 est mise en série avec la diode Zéner 32 pour bloquer le passage du courant provenant de la ligne a uniquement lorsque la tension Vz est inférieure à la tension maximum d'alimentation. Lorsque l'interrupteur 20 est commandé pour ne plus être passant (en fonction contacteur ou en fonction disjoncteur), la bobine 12 et la diode Zéner 32 forment une boucle fermée de courant qui permet la diminution rapide du courant dans la bobine et donc du flux magnétique.

## Revendications

1. Appareil contacteur-disjoncteur logeant d'une part des pôles de puissance qui comportent des ponts de contacts mobiles (2) coopérant avec des contacts fixes (3, 4), et un électro-aimant (10) qui sert à actionner les contacts mobiles en mode contacteur et qui comprend un circuit magnétique fixe (11), un circuit magnétique mobile (13) et une bobine (12) dont l'alimentation est commandée par un interrupteur (20), et d'autre part au moins un capteur de courant (50) servant à commander un électro-aimant de déclenchement, caractérisé en ce que l'électro-aimant d'actionnement et l'électro-aimant de déclenchement sont constitués par un seul électro-aimant dont le circuit magnétique mobile (13) est une palette pivotante reliée mécaniquement aux porte-contacts et ayant un moment d'inertie faible et en ce qu'il comprend des moyens électriques (30) de diminution rapide du flux magnétique, ces moyens étant mis en oeuvre par un dispositif de commande électronique (40) associé au capteur de courant (50).

2. Appareil contacteur-disjoncteur selon la revendication 1, caractérisé en ce que les moyens électriques (30) comportent un interrupteur (31) à ouverture rapide de type électronique qui est disposé en série avec la bobine (12), et un composant électrique (32) de diminution rapide du courant qui est placé en dérivation aux bornes de l'interrupteur à ouverture rapide (31) de façon à être en série avec la bobine (12) pour réaliser une boucle fermée de courant lorsque ledit interrupteur (31) est mis à l'état non passant par le dispositif de commande (40).

3. Appareil contacteur-disjoncteur selon la revendication 2, caractérisé en ce que le composant (32) est constitué par une diode Zéner présentant une tension d'avalanche contrôlée (Vz) inférieure à la tension de claquage (V_{BR}) de l'interrupteur à ouverture rapide (31), la diminution rapide du flux magnétique étant fonction des caractéristiques de la tension (Vz) de la diode Zéner et du nombre de spires (N) de l'enroulement de la bobine (12).

4. Appareil contacteur-disjoncteur selon la revendication 2 comprenant une bobine à deux enroulements, caractérisé en ce qu'un interrupteur à ouverture rapide (31) et un composant électrique (32) sont associés à chaque enroulement (L1, L2) de la bobine.

5. Appareil contacteur-disjoncteur selon la revendication 1, caractérisé en ce que les moyens électriques (30) comportent l'interrupteur de commande (20) de l'alimentation de la bobine et un composant électrique (32) de diminution rapide du courant qui est placé en dérivation aux bornes de la bobine (12) de façon à être en série avec celle-ci lorsque l'interrupteur (20) est mis à l'état non passant par le dispositif de commande (40).

6. Appareil contacteur-disjoncteur selon la revendication 1, caractérisé en ce que la bobine (12) est constituée d'un transformateur qui comprend un enroulement primaire (L3) et un enroulement secondaire (L4) et en ce que les moyens électriques (30) comportent un interrupteur à ouverture rapide (31) de type électronique qui est disposé en série avec l'enroulement primaire (L3), et un composant électrique (32) de diminution rapide du courant qui est placé en série avec l'enroulement secondaire (L4).
